# FASCICULE DE BREVET EUROPEEN

(11) **EP 2 961 697 B1**
(45) Date de publication et mention de la délivrance du brevet: **09.08.2017**
(21) Numéro de dépôt: 14702620.7
(22) Date de dépôt: 05.02.2014
(51) Int. Cl.: C02F 1/469, B01D 61/42, C02F 101/20, C02F 1/461

(54) **PAROI DE SÉPARATION D'ÉLECTROLYTES POUR LE TRANSFERT SÉLECTIF DE CATIONS À TRAVERS LA PAROI ET PROCÉDÉ DE FABRICATION DE LADITE PAROI.**
ELEKTROLYTTRENNUNGSMEMBRAN FÜR SELEKTIVEN TRANSFER VON KATIONEN DURCH DIE MEMBRAN UND VERFAHREN ZUR HERSTELLUNG DER BESAGTEN MEMBRAN
ELECTROLYTE-SEPARATING MEMBRANE FOR SELECTIVE TRANSFER OF CATIONS THROUGH THE MEMBRANE AND PROCESS FOR MANUFACTURING SAID MEMBRANE

(30) Priorité: 26.02.2013 FR 1351699
(43) Date de publication de la demande: 06.01.2016
(73) Titulaire: Université de Lorraine, 54052 Nancy Cedex (FR); Centre National de la Recherche Scientifique (C.N.R.S.), 75794 Paris Cedex 16 (FR)
(72) Inventeur: BOULANGER, Clotilde, F-57420 Coin les Cuvry (FR); KENZARI, Samuel Philippe Claude, F-54200 Andilly (FR); GUYOT, Elodie, F-57155 Marly (FR); DILIBERTO, Sébastien, F-54600 Villers les Nancy (FR)
(74) Mandataire: Novagraaf Technologies
(86) Numéro de dépôt international: PCT/EP2014/052199
(87) Numéro de publication internationale: WO 2014/131586

(56) Documents cités:
- WO-A1-2009/007598
- WO-A1-2011/039469
- WO-A1-2012/010761
- WO-A1-2012/010766
- US-A1- 2004 126 638
- US-A1- 2009 120 788
- Stéphane Dupin: "Étude fondamentale de la transformation du polyamide 12 par frittage laser : mécanismes physico-chimiques et relations microstructures/propriétés", , 5 juillet 2012 (2012-07-05), XP055114943, Laboratoire de recherche Ingénierie des Matériaux Polymères (IMP), UMR 5223, INSA de Lyon, Bâtiment Jules Verne, 3ème étage 17 avenue Jean Capelle 69621 VILLEURBANNE CEDEX, France Extrait de l'Internet: URL:http://theses.insa-lyon.fr/publication /2012ISAL0062/these.pdf [extrait le 2014-04-23]

## Description

### Domaine technique

L'invention concerne un procédé de fabrication d'une paroi de séparation d'électrolytes pour le transfert sélectif de cations à travers ladite paroi.

### TECHNIQUE ANTÉRIEURE

On connaît déjà une paroi formée de chalcogénures à cluster de molybdène, notamment les phases Mo₆X₈ appelées phases de Chevrel, décrit dans la demande de brevet internationale WO 2009/007598, utilisée pour le transfert de cations à travers ladite paroi.

Ce document expose que des cations peuvent être transportés à travers la paroi en matériau de formule Mo₆X₈ (avec X= S, Se ou Te) dénommé Phases de Chevrel où se produisent des systèmes d'oxydoréduction réversibles du type :

Mo₆X₈ + xMⁿ⁺ + xn e⁻ ⇔ MxMo₆X₈

où n est un nombre entier et Mⁿ⁺ est un cation métallique. Ces systèmes sont diversifiés par la nature du cation Mⁿ⁺, du chalcogène X et de la stoechiométrie x du ternaire Mⁿ⁺.

Dans un montage expérimental mettant en oeuvre le procédé de transfert sélectif, la paroi de transfert est placée entre deux compartiments comportant respectivement une électrode en titane platiné qui fonctionne en anode et une électrode métallique (en inox, aluminium, cuivre ou titane platiné) ou en carbone vitreux qui fonctionne en cathode. Le premier compartiment contient un premier électrolyte qui contient différents cations d'un effluent à traiter. Le deuxième compartiment contient un deuxième électrolyte destiné à recevoir les cations sélectionnés.

Un courant électrique continu est établi entre l'anode et la cathode. Dans le fonctionnement électrochimique global de l'ensemble des deux compartiments, il se produit l'intercalation du cation à l'interface MxMo₆S₈/ premier électrolyte (effluent à traiter, mélange des cations Mⁿ⁺, M'ⁿ⁺, M"ⁿ⁺ par exemple), selon :

Mo₆X₈ + xMⁿ⁺ + xn e⁻ => MxMo₆X₈

La désintercalation de ce même cation Mⁿ⁺ à l'interface MxMo₆S₈/ deuxième électrolyte (solution de valorisation de Mⁿ⁺ par exemple) s'effectue réciproquement selon

MxMo₆X₈ => Mo₆X₈ + xn e⁻ + xMⁿ⁺

La mobilité du cation métallique dans la phase de Chevrel permet ainsi le transfert du cation Mⁿ⁺ désolvaté d'un milieu à l'autre sans transfert d'aucune autre espèce chimique de l'un ou de l'autre des compartiments.

Une paroi de transfert sous forme de pastille est obtenue par frittage à chaud d'un mélange de poudre de composition adaptée à la stoechiométrie du matériau désiré. On obtient ainsi des disques de matière active d'une épaisseur de 2 à 5 millimètres.

Les essais avec des parois composées de phases séléniées et sulfurées ont montré qu'en particulier les cations des métaux suivants peuvent être transférées d'un électrolyte à l'autre : fer, manganèse, cobalt, nickel, cuivre, zinc, cadmium. Les limites de densités de courant obtenues sont comprises entre 10 et 20 A/m², avec des rendements faradiques supérieurs à 90%, voire supérieurs à 98%, et une très bonne sélectivité.

Les essais ont aussi démontré que la vitesse de transfert augmentait avec la diminution de l'épaisseur de la paroi. Cependant, la résistance mécanique nécessaire de la paroi limite la diminution de son épaisseur.

Dans le document WO 2012/010766 A1 , on a proposé de réaliser une paroi de transfert comportant deux couches. Une couche de support est réalisée par exemple en matière céramique poreuse et une deuxième couche dite active est déposée sur le support. Le dépôt de la deuxième couche est réalisé par enduction avec une composition comprenant la matière active sous forme de poudre, un liant et un solvant. Le solvant est évaporé par la suite. La couche active ainsi réalisée a une épaisseur de l'ordre de 50 à 100 µm et est étanche. Par contre, le support est perméable et permet à un électrolyte contenu du côté du support d'atteindre la couche active. Les réactions exposées précédemment peuvent se développer. L'utilisation d'une telle paroi conserve les résultats précédents en terme de rendements faradiques, mais en permettant d'atteindre des densités de courant multipliées par cinq ou plus.

Ce document expose également que le réseau hôte de la couche active peut être choisi également parmi les chalcogénures métalliques ou les composés de lithium et d'un métal sous forme d'oxyde, de phosphate ou de fluorure, le métal étant choisi parmi le nickel, le cobalt, le fer, le manganèse, le vanadium ou le titane. De tels réseaux hôtes sont également aptes à transférer des cations métalliques, et en particulier du lithium.

La fabrication des supports en céramique est aisée sur de petits échantillons, mais il est difficile d'augmenter fortement les dimensions de ces supports, ce qui limite les possibilités d'exploitation industrielle du procédé.

L'invention vise à fournir une paroi de séparation d'électrolytes avec une couche active d'un matériau apte à développer des réactions d'intercalation et de désintercalation pour le transfert sélectif de cations à travers la paroi qui puisse être fabriquée avec de larges dimensions.

### Description de l'invention

Avec ces objectifs en vue, l'invention a pour objet un procédé de fabrication d'une paroi comportant un support constitué d'un matériau poreux et perméable et une couche active d'un matériau apte à développer des réactions d'intercalation et de désintercalation pour le transfert sélectif de cations à travers la paroi, la couche active étant déposée sur la couche de support et étanche, caractérisée en ce que le support est en matière synthétique thermoplastique et d'une épaisseur supérieure à 0,8 mm.

En utilisant une matière synthétique pour le support, on s'affranchit des problèmes de fabrication à grande taille des supports en céramique. On constate que l'on peut fabriquer de tels supports avec de grandes dimensions tout en conservant les performances de transfert à travers la couche active. En particulier, on constate que la couche active peut être mise en oeuvre sur le support synthétique de la même manière que sur le support céramique. La nature du support est compatible avec la plupart des électrolytes susceptibles d'être utilisés dans des applications de transfert sélectif de cations, tels que des solutions d'acide ou de sels.

Selon des caractéristiques particulières :
- la porosité du support est comprise entre 20 et 60% de la fraction volumique ; les échantillons avec une porosité dans cette plage ont permis de prouver le fonctionnement du procédé de transfert sélectif ;
- la matière synthétique est choisie dans un groupe comportant du polyamide, des copolymères d'amide, des polyacétates, des polyéthylènes et du polyéther-éther-cétone ; ces matières thermoplastiques sont suffisamment résistantes en termes mécaniques et en termes chimiques en lien avec la nature des électrolytes utilisés ; elles sont également adaptées à un procédé de fabrication tel qu'exposé ci-après ;
- le matériau de la couche active est un chalcogénure métallique ;
- plus particulièrement, le chalcogénure métallique est par exemple un chalcogénure à cluster de molybdène (MoₙXₙ₊₂ ou MₓMoₙXₙ₊₂) où M est un métal et X est un calcogène choisi dans le groupe S, Se et Te ;
- alternativement, le matériau de la couche active est un composé de lithium et d'un métal sous forme d'oxyde, de phosphate ou de fluorure ou d'une combinaison de ces formes, le métal étant choisi dans un groupe comportant le nickel, le cobalt, le fer, le manganèse, le vanadium, le titane et le tungstène ;
- la couche active a une épaisseur supérieure à 50 µm ; les conditions d'étanchéité de la couche active sont atteintes à partir de cette épaisseur.

L'invention a donc pour objet un procédé de fabrication d'une paroi telle que décrite précédemment, selon lequel on prépare une solution comprenant un matériau actif sous forme de poudre, un liant et un solvant, puis on enduit la surface d'un support en matériau poreux avec ladite solution et on fait évaporer le solvant pour former une couche active étanche sur le support, caractérisé en ce que le support est en matière synthétique thermoplastique.

Ledit support en matériau poreux est préalablement obtenu par fabrication additive de couches et frittage sélectif au laser de polymère en poudre. Cette technologie est connue en tant que telle de l'état de la technique (Stéphane Dupin, 5 juillet 2012, Extrait de l'internet http://theses.insa-lyon.fr/publicatin/2012ISAL0062/these.pdf), en revanche sa mise en oeuvre dans le cadre très spécifique de la présente invention n'a jamais été divulguée ni suggérée. Des couches successives de matière polymérique en poudre sont étalées et certaines zones sont chauffées sélectivement afin de fondre partiellement les grains de poudre de telle sorte qu'ils s'agglomèrent. La puissance de chauffe est ajustée pour que la fusion des grains ne soit pas complète de telle sorte que des espaces restent ménagés entre les grains. Ces espaces forment alors les pores du support qui est ainsi construit. Certains pores restent ouverts et confèrent la perméabilité au support. La surface du support ainsi obtenu n'est pas lisse et la couche active qui y est déposée par enduction s'accroche bien au support.

Selon d'autres caractéristiques, le polymère en poudre a une granulométrie comprise entre 1 et 120 µm, de préférence entre 10 et 80 µm, voire entre 40 et 75 µm. La taille des grains détermine aussi la taille des pores du support qui doit être de préférence proche de la taille des grains de la poudre de matière active. C'est en effet de cette manière que l'étanchéité de la couche active est obtenue le plus facilement, c'est-à-dire avec l'épaisseur minimale pour la couche active. L'obtention d'une faible épaisseur permet de préserver la densité de courant qu'il est possible d'obtenir.

Il est également décrit un procédé d'extraction sélective de cations par transfert électrochimique selon lequel on sépare un premier électrolyte contenant des cations et un deuxième électrolyte par une paroi de séparation, caractérisé en ce qu'on utilise comme paroi de séparation des électrolytes, une paroi de transfert telle que définie précédemment, et on assure un transfert des cations à travers ladite paroi de transfert en générant une différence de potentiel (ΔE) entre soit une anode dans le premier électrolyte et une cathode dans le deuxième électrolyte, soit entre une anode dans le premier électrolyte et ladite paroi de transfert, de manière à provoquer une intercalation des cations dans la couche active de la paroi de transfert du côté du premier électrolyte, une diffusion des cations dans la couche active, puis leur désintercalation dans le deuxième électrolyte.

### Brève description des figures

L'invention sera mieux comprise et d'autres particularités et avantages apparaîtront à la lecture de la description qui va suivre, la description faisant référence aux dessins annexés parmi lesquels :

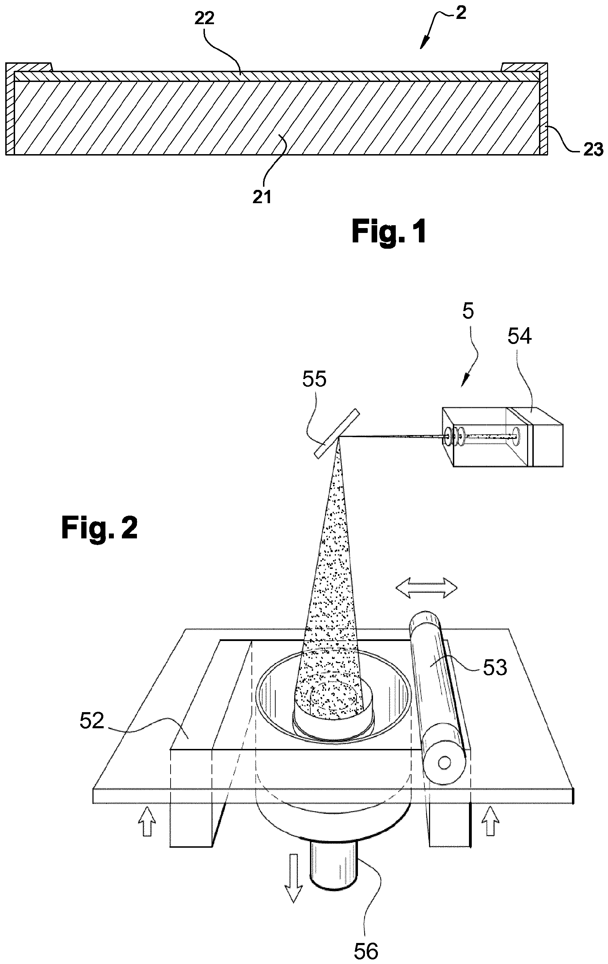

- la figure 1 est une vue en coupe d'une paroi de transfert obtenue par le procédé conforme à l'invention ;
- la figure 2 est une vue d'une installation de construction d'une paroi obtenue par le procédé conforme à l'invention par frittage sélectif au laser ;
- les figures 3 et 4 sont des vues schématiques d'un montage d'essai pour vérifier la porosité ou l'étanchéité de la paroi de la figure 1 ;
- la figure 5 est un schéma de principe d'un dispositif de transfert sélectif entre deux électrolytes.

### DESCRIPTION DETAILLEE

Une paroi de transfert 2 obtenue par le procédé conforme à l'invention est formée d'un support 21 poreux en matière synthétique sur lequel une fine couche active 22 est déposée. La fabrication de la paroi 2 étanche est effectuée en une première phase de fabrication du support 21 , et une deuxième phase d'application de la couche active 22 sur le support 21 . On entend par étanche l'absence de transfert détectable d'une solution aqueuse d'un côté à l'autre de la couche active exposée à la solution, la paroi faisant office de contenant à la solution.

### Elaboration du support poreux

Le support 21 est fabriqué, dans ce mode de réalisation de l'invention, par frittage sélectif par laser de poudre de polymère thermoplastique.

On a utilisé des poudres ayant une granulométrie comprise entre 1 et 120 µm, mais dont l'essentiel de la granulométrie est centrée entre 10 et 80 µm, voire entre 40 et 75 µm. Les principaux essais ont été conduits avec du polyamide 6, du polyamide 11 ou du polyamide 12.

Le dispositif 5 de frittage sélectif par laser comprend un réservoir 52 d'alimentation de poudre dans lequel est placé le polymère en poudre, un rouleau 53 d'apport et de répartition de poudre, ainsi qu'un laser 54. Le laser est par exemple un laser à rayonnement infrarouge de puissance variable (10 à 60 W). Le faisceau laser est dirigé via un miroir 55 vers la zone de poudre que l'on souhaite fritter, sous une atmosphère de préférence neutre, par exemple sous atmosphère d'azote.

Le procédé utilise une plate-forme 56 de fabrication chauffée à une température proche de la température de fusion du polymère choisi. Dans un mode de réalisation particulier, le mélange de poudres est chauffé jusqu'à une température inférieure de quelques degrés Celsius à la température de fusion du polymère, par exemple jusqu'à une température inférieure de 1 à 10°C à la température de fusion du polymère considéré. L'énergie nécessaire à la fusion est ensuite apportée par le laser 54.

Le laser 54 trace la forme de la paroi couche par couche et fournit localement, à chaque strate successive de poudres, l'énergie thermique suffisante pour amener le polymère à une température entraînant sa fusion au moins partielle, en surface des grains. Les poudres non frittées assurent naturellement le support des couches suivantes. La plate-forme 56 de fabrication est mobile et descend de l'épaisseur d'une couche (100 µm), le déplacement de la pièce verticale étant assuré par un piston. Une nouvelle couche de poudre est ensuite étalée par le rouleau 53 et le cycle recommence pour construire le support poreux couche par couche de bas en haut. A la place du rouleau 53, on pourrait également utiliser un autre système mécanique comme par exemple un racleur.

En réalisant la fusion des poudres de manière partielle, les grains s'agglomèrent en restant sous forme de grain et en laissant des pores entre eux avant de se solidifier à nouveau. La densité apparente des échantillons ainsi réalisés, mesurée par la masse volumique apparente sur la masse volumique théorique de la matière des poudres, est comprise entre 40 et 80%. Le taux de porosité correspondant est donc compris entre 20 et 60%, la majorité des échantillons ayant un taux de porosité compris entre 30 et 50%. Une immersion du support dans de l'eau pendant 15 min montre que le support 21 absorbe de l'eau et donc qu'une partie des pores sont ouverts.

L'épaisseur du support peut être choisie en fonction des contraintes mécaniques auxquelles la paroi doit résister, mais des échantillons d'une épaisseur de 1 mm ont été réalisés avec succès.

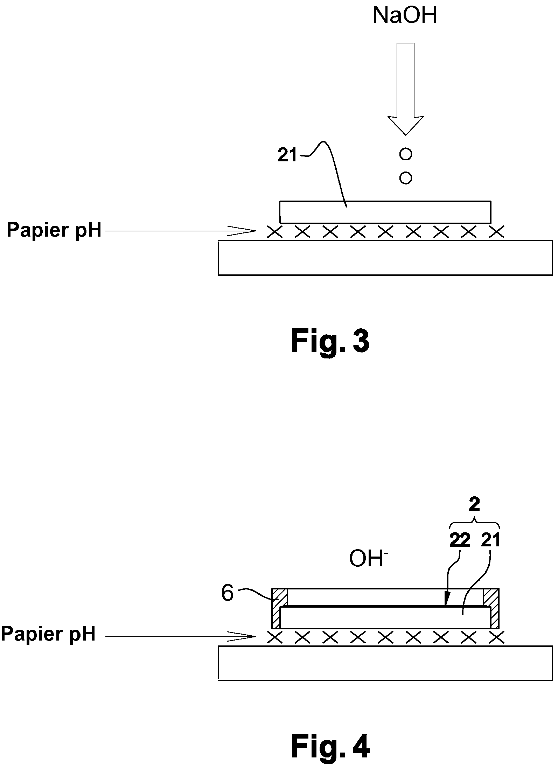

La validation de la perméabilité du support a été réalisée à l'aide de papier pH et du traceur OH⁻ d'une solution de soude à 0,05 mol/L soit 2g/l dans 50% en volume d'eau et 50% en volume d'éthanol de la manière suivante représentée sur le schéma de la figure 3 : le support est déposé sur du papier pH ; du traceur est versé sur le support ; le virage du papier pH après quelques secondes a permis de confirmer une bonne porosité et perméabilité du support car le traceur a traversé le support.

### Elaboration de la couche active

La deuxième phase de la fabrication de la paroi consiste en l'enduction physique d'une face du support poreux 21 . Dans l'exemple qui est montré, l'enduction est réalisée avec une suspension de phase de Chevrel, de formule Mo₆X₈, avec X étant un chalcogène, dans un solvant volatil. La couche active est préparée à partir de composés pulvérulents Mo₆S₈ ou Mo₆Se₈ qui constituent la masse active. Une addition de poly(fluorure de vinylidène), dénommé PVDF dans la nomenclature internationale et ci-après, joue le rôle de liant.

Les phases Mo₆S₈ et Mo₆Se₈ sont issues d'une synthèse céramique telle que décrite par exemple dans le document WO 2012/010766, aux pages 10 et 1 1 de la description.

### Elaboration de la couche active par enduction

### Cas de la matrice en phase de Chevrel

Une suspension constituée de 95% de phases de Chevrel en poudre et 5% de PVDF est formée dans de la 1 -méthyl-2-pyrrolidone, appelée NMP par la suite, à raison de 0,95 g de la phase Mo₆S₈ ou Mo₆Se₈ solide, 0,05 g de PVDF dispersé dans 2 ml de NMP. L'ensemble est soumis à une agitation durant 2 heures.

L'enduction du support s'effectue en appliquant la suspension de Mo₆S₈ ou Mo₆Se₈ NMP-PVDF sur la surface du support poreux à l'aide d'un pinceau pour recouvrir le plus uniformément toute la surface. Ensuite l'ensemble est mis à l'étuve pendant 1 h pour éliminer le solvant NMP. Dans ces conditions, le film de Mo₆S₈ ou Mo₆Se₈ résultant est adhérent à la surface du support 21 avec des épaisseurs de l'ordre de 80 µm. De plus les tests d'étanchéité sont conduits conformément à la figure 4, en appliquant une bordure 6 à l'échantillon 2 autour de la couche active 22 et en versant une solution de soude à 2g/l dans eau/éthanol dans le réservoir ainsi constitué. La paroi de transfert 2 est posée sur du papier pH, la couche active 22 étant en partie supérieure. Les essais confirment la bonne occlusion des pores du support poreux, du fait que le papier pH ne vire pas, même après 6 heures. Des tests de conductance électrique démontrent un bon contact électrique entre les grains.

Les différents essais ont montré que l'étanchéité est atteinte lorsque l'épaisseur de la couche active est de l'ordre de 80µm.

### Cas de la matrice oxyde de type LiₓM_{y}O_{z}

Selon un autre exemple, la paroi est fabriquée avec comme matériau actif une matrice LiₓCoO₂, LiMn₂O₄ , LiV₃O₈, LiNiO₂, LiWO₃ ou LiMnO₂ désignés génériquement par la formule LiₓM_{y}O_{z}. Le principe d'élaboration reste une enduction du support poreux par une suspension de LiₓM_{y}O_{z}.

La solution d'enduction est préparée à partir d'un mélange pulvérulent LiₓM_{y}O_{z} qui constitue le matériau actif à 80% en masse, de PVDF à 10% qui joue le rôle de liant et de carbone à 10% qui assure la conductivité électrique. Le mélange est homogénéisé intimement dans un mortier.

Une suspension est réalisée dans de la 1 -méthyl-2-pyrrolidone avec une agitation durant 2 heures à raison de 1 gramme de mélange de poudre pour 2 ml de NMP.

L'enduction du support s'effectue en appliquant surtoute la surface la suspension LiₓMyO_{z}/PVDF/graphite dans la NMP à l'aide d'un pinceau pour recouvrir le plus uniformément toute la surface. Ensuite l'ensemble est mis à l'étuve pendant 1 h pour éliminer le solvant NMP. Dans ces conditions le film d'oxyde résultant est adhérent à la surface du support avec des épaisseurs de l'ordre de 80 µm. De plus, les tests d'étanchéité confirment la bonne occlusion des pores du support poreux. Des tests de conductance électrique démontrent un bon comportement électrique du film.

Quel que soit le type de matrice, pour suivre les potentiels d'interface, il est nécessaire de mettre en place un contact électrique autour de la paroi à l'aide de laque de graphite 23. On badigeonne le contour de la paroi et on déborde sur la face de la couche active 22.

### Procédé de transfert sélectif

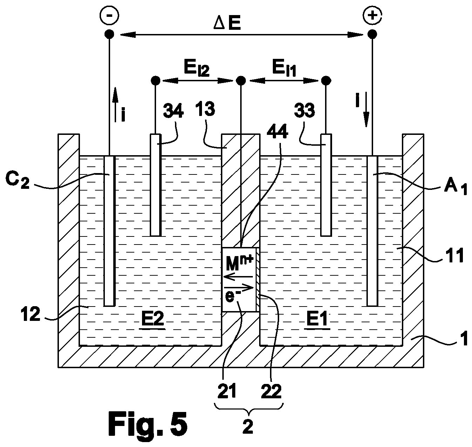

Le schéma de la figure 5 montre un dispositif pour mettre en oeuvre un procédé de transfert sélectif utilisant des parois de transfert obtenues par le procédé selon l'invention. Le dispositif comporte une cuve 1 comportant deux compartiments 11 et 12, adaptés pour recevoir un électrolyte et séparés par une cloison de séparation 13 dans laquelle est placée une paroi de transfert 2, montée dans la cloison 13 de manière étanche.

Le dispositif comporte aussi une anode A1 placée dans le premier compartiment 11 et une cathode C2 placée dans le deuxième compartiment 12. Une différence de potentiel ΔE peut être appliquée entre l'anode A1 et la cathode C2 par des moyens connus en soi, afin d'imposer et de contrôler un courant i entre les électrolytes E1 et E2. L'anode A1 est par exemple une électrode en titane platiné et la cathode C2 est par exemple une électrode métallique (en inox, aluminium, cuivre ou titane platiné) ou en carbone vitreux.

La couche active 22 est placée du côté du premier compartiment 11, même si le système fonctionne aussi lorsqu'elle est du côté du deuxième compartiment 12. Un système de contact mobile à ressort 44 assure une connexion électrique avec le contour de la paroi 2 recouvert de laque de graphite, et permet de relier celle-ci à un appareil de contrôle, adapté notamment pour mesurer le potentiel d'interface Ei1 , Ei2 de la paroi de transfert 2 par rapport à des électrodes de référence 33, 34 disposées respectivement dans chaque compartiment 11 , 12 de la cuve 1 , comme illustré figure 5.

La mise en oeuvre du dispositif s'effectue typiquement de la manière suivante :
On remplit les compartiments 11 et 12 avec l'électrolyte souhaité, par exemple, et de manière nullement limitative, une solution de mélanges de cations M₍ᵢ₎ en concentration au moins égale à 10⁻³ mol/L comme premier électrolyte E1 dans le premier compartiment 11 , et 100 ml Na₂SO₄ 0,5 M comme deuxième électrolyte E2 dans le deuxième compartiment 12, avec M(i) étant un ou plusieurs cations métalliques que l'on souhaite séparer et désignés respectivement par Mⁿ⁺, M'ⁿ⁺, M"^{n'+}. On place l'anode A1 dans le premier compartiment 11 et la cathode C2 dans le deuxième compartiment 12, et on relie le contact 44 de la paroi avec des moyens de contrôle potentiométrique, raccordés aux électrodes de référence 33, 34 plongées dans les électrolytes E1 et E2. On peut ainsi contrôler les potentiels d'interface et ajuster en conséquence l'intensité entre l'anode A1 et la cathode C2, de manière à obtenir une densité de courant rapportée à la surface opérationnelle de la paroi de transfert 2, ou de l'ensemble des parois de transfert disposées en parallèle, comprise par exemple entre 2 et 200 A/m².

Un régime intensiostatique global est établi entre l'anode A1 et la cathode C2. Nommons RH, pour réseau hôte, le matériau de la couche active 22. Dans le fonctionnement électrochimique global de l'ensemble des deux compartiments, l'électrolyte E1 étant une solution d'origine à traiter comportant un mélange des cations de différents métaux et de charges identiques ou différentes, Mⁿ⁺, M'ⁿ⁺, M"^{n'+} par exemple, et l'électrolyte E2 étant une solution de valorisation du métal M, il se produit :
- l'intercalation du cation Mⁿ⁺ à l'interface de la couche active 22 avec l'électrolyte E1 , selon :

   RH + x Mⁿ⁺ + xn e⁻ => MₓRH
- la désintercalation de ce même cation à l'interface de la couche active 22 avec l'électrolyte E2 (solution de valorisation de Mⁿ⁺ par exemple), qui s'effectue réciproquement selon :

   MxRH => RH + xn e⁻ + x Mⁿ⁺

La mobilité du cation métallique dans le réseau hôte permet ainsi le transfert du cation Mⁿ⁺ désolvaté d'un milieu à l'autre sans transfert d'aucune autre espèce chimique de l'un ou de l'autre des compartiments.

On notera encore de manière générale que les électrolytes placés dans les deux compartiments 11 , 12 comportant l'anode A1 et la cathode C2 peuvent être différents, notamment par la nature des sels de fond, par le niveau d'acidité, par la présence de complexants, par la nature des solvants, notamment solvants non aqueux organiques ou minéraux (DMSO, DMF, liquides ioniques, électrolytes solides, etc.). On peut ainsi par exemple effectuer un transfert ionique d'un milieu sulfate à un milieu chlorure sans diffusion dudit milieu.

### Exemple 1

Le support est réalisé en polyamide 12, en plusieurs échantillons dont la porosité est comprise entre 30 et 50% et l'épaisseur est de 0,9±0,1 mm. La couche active est à base de LiMn₂O₄ et a une épaisseur de l'ordre de 80 µm.

Le premier électrolyte E1 est une solution aqueuse de sulfate de lithium 0,5 mol/l soit 7g/l de lithium et de sulfate de sodium 0,5 mol/l soit 11,5g/l de sodium.

Le deuxième électrolyte est une solution de sulfate de sodium à 0,05 mol/l, soit 7,8g/L de potassium.

On établit un courant stable en intensité à 110 A/m². On transfère ainsi sélectivement 28 g.h⁻¹. m⁻² de lithium du premier au deuxième électrolyte avec un rendement faradique de 94%.

### Exemple 2

Le support est réalisé en polyamide 12, en plusieurs échantillons dont la porosité est comprise entre 30 et 50%. La couche active est à base de Mo₆S₈ et a une épaisseur de l'ordre de 80 µm.

Le premier électrolyte E1 est une solution aqueuse de sulfate de cobalt 0,1 mol/l soit 5,9 g/l de cobalt et de sulfate de nickel à 0,1 mol/l soit 5,8 g/l de nickel.

Le deuxième électrolyte est une solution aqueuse de sulfate de sodium à 0,05 mol/l, soit 2,3g/l de sodium.

On établit un courant stable en intensité à 70 A/m². On transfère ainsi 154 g.h⁻¹. m⁻² de cobalt du premier au deuxième électrolyte avec un rendement faradique de 98%. Le nickel n'est pas transféré.

### Exemple 3

Le support est réalisé en polyamide 12, en plusieurs échantillons dont la porosité est comprise entre 30 et 50%. La couche active est à base de phases de Chevrel Mo₆Se₈ et a une épaisseur de l'ordre de 80 µm.

Le premier électrolyte E1 est une solution aqueuse de sulfate de cadmium à 1 mol/l soit 1 12 g/l de cadmium et de sulfate de nickel 1 mol/l soit 59g/l de nickel.

Le deuxième électrolyte est une solution de sulfate de sodium à 0,05 mol/l soit 2,3 g/l de sodium.

On établit un courant stable en intensité à 70 A/m2. On transfère ainsi sélectivement 293 g.h⁻¹. m⁻² de cadmium du premier au deuxième électrolyte avec un rendement faradique de 99%. Le nickel n'est pas transféré.

## Revendications

1. Procédé de fabrication d'une paroi de séparation d'électrolytes, selon lequel :
- on prépare une solution comprenant un matériau actif sous forme de poudre et apte à développer des réactions d'intercalation et de désintercalation pour le transfert sélectif de cations à travers la paroi (2), un liant et un solvant, puis
- on fabrique un support (21) en matériau poreux, ledit support (21) étant d'une épaisseur supérieure à 0,8 mm.
- on enduit la surface dudit support (21) avec ladite solution, et
- on fait évaporer ledit solvant pour former une couche active (22) étanche sur ledit support, l'étanchéité étant évaluée par l'absence de transfert détectable d'une solution aqueuse d'un côté à l'autre de ladite couche active exposée à la solution pendant une durée supérieure à 6 heures, la paroi faisant office de contenant à la solution,
**caractérisé en ce que** le support est fabriqué en matière synthétique thermoplastique par fabrication additive de couches et frittage laser sélectif de polymère en poudre.

2. Procédé selon la revendication 1, selon lequel le polymère en poudre a une granulométrie comprise entre 1 et 120 µm.

3. Procédé selon la revendication 2, selon lequel le polymère en poudre a une granulométrie comprise entre 10 et 80 µm.

4. Procédé selon la revendication 3, selon lequel le polymère en poudre a une granulométrie comprise entre 40 et 75 µm.

## Patentansprüche

1. Verfahren zur Herstellung einer Elektrolyt-Trennwand, wobei:
- man eine Lösung vorbereitet, die ein aktives Material in Form von Pulver und imstande, Interkalationsreaktionen und Desinterkalationsreaktionen für den selektiven Transfer von Kationen durch die Wand (2) hindurch zu entwickeln, ein Bindemittel und ein Lösungsmittel umfasst,
- man danach einen Träger (21) aus einem porösen Material herstellt, wobei der besagte Träger (21) eine Dicke von mehr als 0,8 mm aufweist.
- man die Oberfläche des besagten Trägers (21) mit der besagten Lösung überzieht, und
- man das besagte Lösungsmittel verdampfen lässt, um eine dichte aktive Schicht (22) auf dem besagten Träger zu bilden, wobei die Dichtheit durch das Nichtvorhandensein eines erfassbaren Transfers einer wässrigen Lösung von einer Seite zur anderen der besagten aktiven Schicht bewertet wird, die der Lösung während einer Dauer von mehr als 6 Stunden ausgesetzt wird, wobei die Wand als Behältnis für die Lösung auftritt,
**dadurch gekennzeichnet, dass** der Träger aus einem thermoplastischen synthetischen Material durch additive Herstellung von Schichten und selektives Lasersintern von pulverförmigem Polymer hergestellt wird.

2. Verfahren nach Anspruch 1, wobei das pulverförmige Polymer eine Korngröße aufweist, die zwischen 1 und 120 **µ**m enthalten ist.

3. Verfahren nach Anspruch 2, wobei das pulverförmige Polymer eine Korngröße aufweist, die zwischen 10 und 80 **µ**m enthalten ist.

4. Verfahren nach Anspruch 3, wobei das pulverförmige Polymer eine Korngröße aufweist, die zwischen 40 und 75 **µ**m enthalten ist.

## Claims

1. Method for manufacturing a membrane for separating electrolytes, according to which:
- a solution is prepared comprising an active material as a powder and able to develop insertion and de-insertion reactions for selectively transferring cations through the membrane (2), a binder and a solvent, then
- a support (21) is manufactured in porous material, said support (21) having a thickness of more than 0.8 mm.
- the surface of said support (21) is coated with said solution, and
- said solvent is evaporated in order to form a sealed active layer (22) on said support, the sealing being evaluated by the absence of any detectable transfer of an aqueous solution from one side to the other of said active layer exposed to the solution for a period of more than 6 hours, the membrane acting as a container for the solution,
**characterized in that** the support (21) is manufactured in a thermoplastic synthetic material by additive manufacturing of layers and selective laser sintering of a powdered polymer.

2. The method according to claim 1, according to which the powdered polymer has a grain size comprised between 1 and 120 µm.

3. The method according to claim 2, according to which the powdered polymer has a grain size comprised between 10 and 80 µm.

4. The method according to claim 3, according to which the powdered polymer has a grain size comprised between 40 and 75 µm.
